# EUROPÄISCHE PATENTSCHRIFT

(11) **EP 2 899 008 B1**
(45) Veröffentlichungstag und Bekanntmachung des Hinweises auf die Patenterteilung: **31.08.2016**
(21) Anmeldenummer: 14152661.6
(22) Anmeldetag: 27.01.2014
(51) Int. Cl.: B29C 33/42, B29C 45/37, B29C 45/00, B29C 45/16, B29C 45/26, B29C 45/56

(54) **Spritzgiessverfahren zur Herstellung eines Verbundbauteiles mit Oberflächenstrukturierung im Kontaktbereich der Schichten zur Verbesserung der Haftung**
Injection moulding method for the manufacture of a composite product with a structured surface in the contact area of the layers in order to improve adhesion
Procédé de moulage par injection pour la fabrication d'un élément composite avec structuration de surface dans la zone de contact des couches afin d'améliorer l'adhérence

(43) Veröffentlichungstag der Anmeldung: 29.07.2015
(73) Patentinhaber: Covestro Deutschland AG, 51373 Leverkusen (DE)
(72) Erfinder: Helmig, Jan, 51368 Leverkusen (DE); Möller, Philipp, 51368 Leverkusen (DE)
(74) Vertreter: Levpat

(56) Entgegenhaltungen:
- EP-A1- 2 578 372
- EP-A2- 1 705 152
- WO-A1-2006/072366
- WO-A1-2008/123589
- WO-A2-99/34881
- DE-A1-102006 033 059
- DE-A1-102008 020 727
- DE-A1-102010 034 858
- DE-B3-102006 048 252

## Beschreibung

Gegenstand der vorliegenden Erfindung ist ein Verfahren zur Herstellung von Verbundbauteilen, umfassend einen Träger aus einer thermoplastischen Zusammensetzung und eine zweite Schicht, mit verbesserter Haftung zwischen den Schichten.

Thermoplastische Träger werden insbesondere zur Verbesserung der Oberflächeneigenschaften, der Haptik, der Optik, zur Geräusch- und Wärmedämmung mit einer weiteren Schicht versehen.

Ein aus dem Stand der Technik bekanntes Verfahren zur Herstellung von Verbundteilen mit einem thermoplastischen Träger und einer Beschichtung sieht die Beschichtung unmittelbar im Anschluss an die Herstellung des Trägers mittels Spritzguss in derselben Maschine vor. Nach dem Spritzgießen des Trägers wird der Hohlraum um den Träger vergrößert und die Zusammensetzung zur Ausbildung der Beschichtung in die neue Kavität eingespritzt (Hüllbauweise).

Beispielsweise beschreibt WO 2006/072366 A1 ein Verfahren zum Formen und Beschichten eines Substrats in einem Formwerkzeug mit wenigstens zwei Kavitäten. Das Verfahren umfasst die Schritte:
a) Formen eines Substrats in einer ersten Kavität des Formwerkzeugs,
b) das Einbringen des im vorangegangenen Schritt hergestellten Substrats in eine zweite Kavität des Formwerkzeugs und
c) Beschichten des Substrats in der zweiten Kavität mit einem Lack, wobei das Beschichten unter erhöhtem Druck erfolgt.

Beispielhaft und bevorzugt werden Polyurethanlacke und PC/ABS-Substrate (Polycarbonat/Acrylnitril-Butadien-Styrol-Substrate) genannt. Hinsichtlich einer besonderen Gestaltung der Schichten zur Verbesserung der Hafteigenschaften des Materialverbundes werden in dieser Anmeldung keine Hinweise gegeben.

DE 10 2006 033 059 A1 offenbart ein Verfahren zur Herstellung von Kunststoff-Innenraumteilen. Hierbei wird in einem ersten Schritt der Träger in einem ersten Werkzeug geformt, wobei das erste Werkzeug danach mindestens teilweise durch ein zweites Werkzeug ersetzt wird und anschließend in einem zweiten Schritt die Deckschicht auf dem Träger geformt wird. Dabei kommt als Trägermaterial eine Hartkomponente, z.B. Polyamid/ABS-Blends oder Polycarbonat/ABS-Blends, und als Deckschicht eine Weichkomponente, vorzugsweise Polyurethanschaum, zum Einsatz. Zur Verbesserung der Haftung wird vorgeschlagen, die Oberfläche durch Primer oder Laser-, Corona- oder Plasmabehandlung vorzubereiten.

Ein Nachteil dieses herkömmlichen Prozesses ist, dass die Beschichtung häufig nicht an jeder Stelle fest auf dem Träger haftet, so dass es insbesondere beim Lösen des Werkzeugs zu Schäden an der Beschichtung kommen kann.

DE 10 2006 048 252 B3 offenbart ein Verfahren zur Herstellung eines Verbundbauteils, insbesondere umfassend ein Spritzgussteil sowie ein Polyurethan-Element, mit den Schritten:
a) Herstellen eines Trägerbauteils,
b) Verbringen oder Umsetzen des Trägerbauteils in eine geöffnete Kavität eines Werkzeugs,
c) Schließen des Werkzeugs bis auf eine vorbestimmte Position, wobei eine vergrößerte Kavität mit einer ersten Größe geschaffen ist,
d) Erzeugen eines Unterdrucks in der vergrößerten Kavität erster Größe,
e) Einfüllen eines Flutungsmaterials in die vergrößerte Kavität und
f) Durchführen eines Prägeschrittes gleichzeitig mit dem Einfüllen und/oder anschließend an das Einfüllen des Flutungsmaterials, wobei die Kavität zumindest geringfügig verkleinert wird.

Zur Verbesserung der Verbundhaftung wird hier eine Aktivierung der Oberfläche des Thermoplasten durch Abflammen, Plasmabeaufschlagung oder Gas beschrieben.

Im Gegensatz zur erfindungsgemäßen Strukturierung dient die Aktivierung einer Oberfläche zur Einstellung der Oberflächenspannung und Reinigung bzw. verbesserten Benetzung einer Oberfläche. Dies erfolgt auf molekularer Ebene. Es werden keine makroskopischen Strukturen eingebracht, die eine gezielte Steigerung der Verbundhaftung zur Folge haben, wie bei der vorliegenden Erfindung.

Es wurden bereits weitere Versuche unternommen, die Haftung zwischen den Schichten eines Verbundbauteils zu verbessern. Die WO 99/20464 A1 beispielsweise beschreibt einen Verbund aus wenigstens zwei unterschiedlichen unmittelbar miteinander verbundenen Kunststoffmaterialien, wovon eines ein thermoplastisches Polymer oder eine Mischung von thermoplastischen Polymeren ist und das andere ein Polyurethan ist, wobei die thermoplastische Schicht eine polare Verbindung aus wenigstens einem der Metalle der 1. bis 5. Hauptgruppe oder der 1. bis 8. Nebengruppe des Periodensystems als feinstverteiltes anorganisches Pulver enthält, beispielsweise ein Oxid, Sulfat, Sulfit, Carbonat, Hydroxid, Carbid, Nitrat, Nitrit, Nitrid, Borat, Silikat, Phosphat, Hydrid, Phosphit oder Phosphonat. Das Einbringen solcher Pulver geschieht bei der Herstellung des thermoplastischen Materials. Das Einbringen der Pulver wirkt sich auf die Eigenschaften des

Thermoplasten, beispielsweise die mechanischen Eigenschaften, aus.

Die WO 99/34881 betrifft eine verbesserte Adhäsion zweier an einander gespritzter Shichten mit einer Strukturtiefe der ersten Schicht von 50-381 µm.

Es bestand nun die Aufgabe, die Haftung zwischen in direktem Kontakt stehendem thermoplastischem Träger und Beschichtung zu optimieren, um den Ausschuss bei den Verbundteilen zu minimieren, die Qualität der Verbundteile zu verbessern und um zu vermeiden, dass Beschichtungsreste an dem Werkzeug hängen bleiben.

Die Aufgabe wird erfindungsgemäß gelöst durch ein Verfahren zur Herstellung eines erfindungsgemäßen Verbundbauteils, nach Anspruch 1.

Unter "Strukturieren" wird erfindungsgemäß verstanden, dass dem Träger des Verbundbauteils, der Schicht aus thermoplastischem Material, eine Struktur verliehen wird, die von der glatten Oberflächenstruktur, wie sie sich durch Spritzguss mit einem Werkzeug mit glatter Oberfläche zu der Kavität hin ergibt, abweicht. Eine entsprechende "Struktur" kann verschiedene Strukturtiefen aufweisen, d.h. sie kann unterschiedlich tief in den Träger eingeprägt sein. Auch können die Abstände zwischen den Strukturelementen, z.B. den Punkten, variieren. Eine Struktur in der Oberfläche des Trägers wird erfindungsgemäß bevorzugt erreicht, indem das Werkzeug, in welchem der Träger durch Spritzguss hergestellt wird, mit einer entsprechenden Negativform versehen wird. Bevorzugt geschieht dieses, indem das Werkzeug, insbesondere ein aus Keramik gefertigter Werkzeugeinsatz bzw. ein Werkzeug mit keramischer Oberfläche, vor dem Aushärten mit einem strukturierten Element geprägt wird. Eine Prägung kann beispielsweise mit einer entsprechenden Maske zur Ausbildung eines Punktmusters oder eines Rautenmusters vorgenommen werden oder mit Elementen wie Schleifpapier, Feilen, textilen Materialien erfolgen. Das Werkzeug kann auch mit einer entsprechenden Struktur versehen werden, indem nachträglich durch Erodieren eine Struktur eingebracht wird. Wenngleich dieses bevorzugte Ausführungsformen sind, um dem Werkzeug das notwendige Strukturierungselement zu verleihen, soll die Erfindung nicht auf solche Wege beschränkt sein. Wichtig ist nur, dass das verwendete Werkzeug eine entsprechende Struktur aufweist, die auch durch andere Verfahren, etwa Lasern, erzielt werden kann. Die Struktur wird dann auf der Oberfläche des thermoplastischen Trägers abgebildet.

Unter "Rohstoffgemisch" in Verfahrensschritt (iv) werden solche Kombinationen von Bestandteilen verstanden, welche zur Ausbildung der zweiten Schicht, d.h. insbesondere zur Ausbildung eines Polyurethan-Hartlackes, Polyurethan-Weichlackes, einer Polyurethan-Haut oder eines Polyurethan-Schaumes dienen, d.h., der für die Füllung des Verbundelementes verwendete Schaumstoff kann überwiegend offenzellig oder geschlossenzellig sein und verschiedenste Füllstoffe enthalten. Für das Aufschäumen können chemische oder physikalische Treibmittel genutzt werden. Geeignete Polymere zur Herstellung von solchen Kernlagen können isocyanatbasiert (Polyurethan, Polyharnstoff, Polyisocyanurat, Polyoxazolidinon, Polycarbodiimid), Epoxidbasiert, Phenol-basiert, Melamin-basiert, PVC, Polyimid, Polyamid oder Mischungen der genannten Polymere sein, wobei Duromere bevorzugt und isocyanat-basierte Duromere und ihre Mischungen besonders bevorzugt sind.

Zur Vergrößerung der Kavität in Verfahrensschritt (iii) kann das Spritzgießwerkzeug geöffnet und nachfolgend eine Hälfte der Spritzgießwerkzeugkavität durch eine neue Hälfte mit größeren Hohlformmaßen ausgetauscht werden. Es kann aber auch der Träger von der ersten Werkzeugkavität in eine zweite, hinsichtlich seiner Hohlformmaße größeren Kavität desselben oder eines zweiten Werkzeugs umgesetzt werden oder ebenso die erste Kavität um ein Spaltmaß geöffnet werden.

Wird der Träger umgesetzt, kann dieses nach bekannten Verfahren erfolgen, wie sie beispielsweise beim Mehrfarbenspritzgießen angewendet werden. Typische Verfahren sind einerseits das Umsetzen mit Drehteller, Wendeplatte, Schiebekavität oder Indexplatte oder vergleichbare Verfahren, bei denen das Substrat auf einem Kern verbleibt. Verbleibt das Substrat zum Umsetzen auf dem Kern, hat dies den Vorteil, dass die Lage auch nach dem Umsetzen passgenau definiert ist. Andererseits sind aus dem Stand der Technik Verfahren zum Umsetzen eines Substrats bekannt, bei denen das Substrat, z.B. mit Hilfe eines Handhabungssystems, aus einer Kavität entnommen und in eine andere Kavität eingelegt wird. Das Umsetzen mit Entnahme des Substrats bietet größeren Gestaltungsspielraum bei der Beschichtung, z.B. bei der Generierung eines Umbugs oder maskierter Bereiche.

Wenngleich erfindungsgemäß bevorzugt eine Beschichtung und damit auch eine vorangehende Strukturierung direkt in der Spritzgießanlage bei vergrößerter Kavität erfolgt, so sind erfindungsgemäße Verbundteile auch solche, bei denen die Träger aus thermoplastischem Material auf umständlicherem Weg eine strukturierte Oberfläche erhalten haben, indem der Kunststoffkörper nachträglich bearbeitet wurde, z.B. durch Lasern, nachträgliches Aufschmelzen mit Einprägung einer Struktur oder Einritzen einer Struktur. Das Auftragen der zweiten Schicht erfolgt dann vorzugsweise durch das Überfluten des strukturierten Kunststoffkörpers in einem geschlossenen oder offenen Werkzeug, kann aber auch mittels Sprühverfahren, Überflutung ohne Werkzeug oder andere Applikationsverfahren reaktiver Systeme erfolgen. Durch das erfindungsgemäße Verfahren zur Herstellung der Verbundbauteile mit der unmittelbaren Abfolge der Reaktionsschritte an einem Ort wird verhindert, dass die Temperatur des Werkstücks während des Prozesses auf Raumtemperatur abkühlt. Hierdurch wird eine Reduktion der Herstellungszeiten und eine höhere Energieeffizienz des Gesamtverfahrens erreicht.

Vor der Entformung des Werkstücks wird das Werkstück bis zur Formstabilität abgekühlt.

Eine erhöhte Werkzeugtemperatur bei der Erstellung des Kunststoffkörpers führt zu einer verbesserten Abformung der Strukturen, ist aber für die erfindungsgemäßen Strukturen nicht zwingend notwendig. Die erhöhte Werkzeugtemperatur kann zyklussynchron variabel gestaltet werden, wie es bei bekannten Verfahren, z.B. variotherme Temperierung mittels Wasser, Dampf, oder Induktion möglich ist.

Wenn Polycarbonat als Trägermaterial verwendet wird, beträgt die Werkzeugtemperatur bevorzugt 80 bis 130°C, bei einem Polycarbonat-Blend bevorzugt 60 bis 100°C.

Erfindungsgemäß als Strukturen bevorzugt sind Erodierstrukturen, Punktraster, Rautenraster, textile Strukturen, wie sie beispielsweise durch Abformung von Textilien, beispielsweise Mikrofasertüchern, erhalten werden, Schleifpapierstrukturen und Feilenstrukturen, besonders bevorzugt Punktraster, textile Strukturen, Schleifpapierstrukturen und Feilenstrukturen, ganz besonders bevorzugt textile Strukturen, Schleifpapierstrukturen und Feilenstrukturen.

Bei Punktrastern und Rautenrastern sind solche Strukturen weiter bevorzugt, die eine größere Strukturtiefe aufweisen, d.h. ein Punktraster mit einer Strukturtiefe von 250 µm ist stärker bevorzugt als ein Punktraster mit einer Strukturtiefe von 150 µm, welches stärker bevorzugt ist als ein Punktmuster mit einer Strukturtiefe von 85 µm. Bei Rautenrastern ist beispielsweise ein Rautenraster mit einer Strukturtiefe von 250 µm stärker bevorzugt als ein Rautenraster mit einer Strukturtiefe von 150 µm, das seinerseits stärker bevorzugt ist als ein Rautenraster mit einer Strukturtiefe von 70 µm.

Unter der "an die zweite Schicht angrenzenden Fläche des Trägers", wird erfindungsgemäß die Fläche verstanden, die in Kontakt zu der zweiten Schicht, z.B. einer Beschichtung, etwa einem Lack, steht. Hierbei kann es sich um eine einzelne Seite des Trägers handeln, aber auch um seine gesamte Oberfläche, wenn der Träger vollständig mit einer zweiten Schicht umschlossen ist. Ebenso kann auch nur eine begrenzte Fläche einer Seite des Trägers eine Struktur aufweisen und dort mit einer zweiten Schicht versehen sein.

Erfindungsgemäß kann als Material für den Träger jeder Thermoplast oder auch eine Mischung verschiedener Thermoplasten verwendet werden.

Bevorzugt ist der verwendete Thermoplast ein Polycarbonat, ein Polystyrol, ein Styrol-Copolymer, beispielsweise transparentes Polystyrolacrylnitril (PSAN) ein aromatischer Polyester, beispielsweise Polyethylenterephthalat, Polybutylenterephthalat, Polyethylennaphthalat, oder ein sonstiges Polyalkylenterephthalat, ein Polyolefin, etwa ein Polypropylen oder ein Polyethylen, ein Polyacrylat oder Copolyacrylat, ein Polymethacrylat oder Copolymethacrylat, beispielsweise Poly- oder Copolymethylmethacrylat, ein Polyamid, ein Styrol-Acrylnitril-Copolymer, ein thermoplastisches Polyurethan, ein Polymer auf Basis zyklischer Olefine oder eine Mischung aus den genannten Polymeren.

Die Thermoplaste enthalten im Allgemeinen übliche Additive wie Entformungsmittel, Thermostabilisatoren, UV-Absorber, aber auch Flammschutzmittel, IR-Absorber, Antistatika, Farbmittel etc. können enthalten sein.

Besonders bevorzugt sind die thermoplastischen Kunststoffe ausgewählt aus der Gruppe bestehend aus Polycarbonaten (Homo- oder Copolycarbonate) sowie Polycarbonat-Blends, etwa Polycarbonat/Polyester-Blends oder Polycarbonat/ABS-Blends (ABS: Acrylnitril-Butadien-Styrol- Copolymerisat) oder Blends mit Styrol/Acrylnitril-Copolymeren (SAN). Als Polycarbonat/Polyester-Blends sind Mischungen von Polycarbonat mit Polyalkylenterephthalat bevorzugt (insbesondere mit Polybutylenterephthalat). Der Anteil des Polyalkylenterephthalat beträgt im allgemeinen 5 bis 95 Gew.-%, bevorzugt 10 bis 70 Gew.-%, insbesondere 30 bis 60 Gew.-%, bezogen auf die Gesamtzusammensetzung des thermoplastischen Trägers.

Polycarbonate im Sinn der vorliegenden Erfindung sind sowohl Homopolycarbonate, Copolycarbonate als auch Polyestercarbonate wie sie beispielsweise in der EP 1 657 281 A1 beschrieben sind. Beispielsweise geeignete aromatische Polycarbonate und Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie DE 1 495 626 B1, DE 2 232 877 A1, DE 2 703 376 A1, DE 2 714 544 A1, DE 3 000 610 A1, DE 3 832 396 A1; zur Herstellung aromatischer Polycarbonate siehe beispielsweise DE 3 007 934 A1). Für die Herstellung von Copolycarbonaten können auch 1 bis 25 Gew.-%, vorzugsweise 2,5 bis 25 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634 A) und nach literaturbekannten Verfahren herstellbar. Die Herstellung Polydiorganosiloxan-haltiger Copolycarbonate ist in der DE 3 334 782 A1 beschrieben.

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 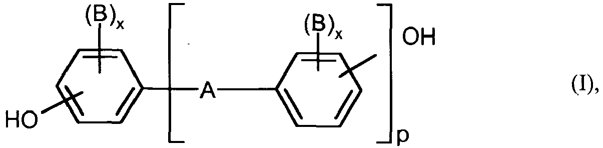 wobei
A eine Einfachbindung, C₁- bis C₅-Alkylen, C₂- bis C₅-Alkyliden, C₅- bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 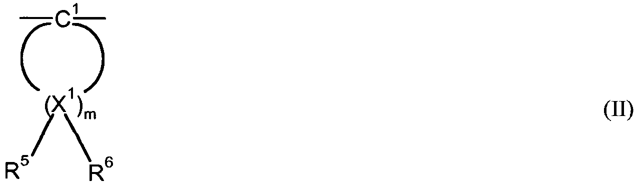 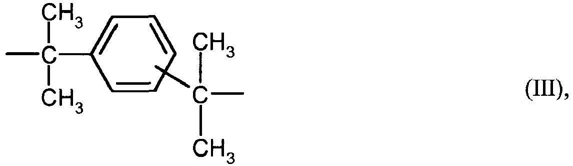
   - B: jeweils C₁- bis C₁₂-Alkyl, vorzugsweise Methyl, Halogen, vorzugsweise Chlor und/oder Brom,
   - x: jeweils unabhängig voneinander 0, 1 oder 2,
   - p: 1 oder 0 sind, und
   - R⁵ und R⁶: für jedes X¹ individuell wählbar, unabhängig voneinander Wasserstoff oder C₁- bis C₆-Alkyl, vorzugsweise Wasserstoff, Methyl oder Ethyl,
   - X¹: Kohlenstoff und
   - m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-bis -C₅-alkane, Bis-(hydroxyphenyl)-C₅- oder -C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol% und 10 Mol%, bezogen auf die Molsumme der jeweils eingesetzten Diphenole.

Die Polycarbonate können linear oder verzweigt sein. Es können auch Mischungen aus verzweigten und unverzweigten Polycarbonaten eingesetzt werden. Geeignete Verzweiger für Polycarbonate sind aus der Literatur bekannt und beispielsweise beschrieben in den Patentschriften US-A 4 185 009 und DE 25 00 092 A1 (erfindungsgemäße 3,3-Bis-(4-hydroxyaryl-oxindole, s. jeweils gesamtes Dokument), DE 42 40 313 A1 (s. S. 3, Z. 33 bis 55), DE 19 943 642 A1 (s. S. 5, Z. 25 bis 34) und US-B 5 367 044 sowie in hierin zitierter Literatur. Verzweiger, bevorzugt trifunktionelle Verbindungen oder Verbindungen mit noch mehr Funktionen, beispielsweise solche mit drei oder mehr phenolischen OH-Gruppen, werden vorzugsweise in Mengen von 0,05 bis 2,0 Mol%, bezogen auf die Gesamtmenge an einzusetzenden Diphenolen, eingebaut. Darüber hinaus können die verwendeten Polycarbonate auch intrinsisch verzweigt sein, wobei hier kein Verzweiger im Rahmen der Polycarbonatherstellung zugegeben wird. Ein Beispiel für intrinsische Verzweigungen sind so genannte Fries-Strukturen, wie sie für Schmelzepolycarbonate in der EP 1 506 249 A1 offenbart sind.

Bevorzugte Polycarbonate sind neben den Bisphenol-A-Homopolycarbonaten die Copolycarbonate von Bisphenol A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Zudem können bei der Polycarbonat-Herstellung Kettenabbrecher eingesetzt werden. Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁- bis C₂₂-Alkylgruppen oder durch Halogenatome substituiert sein können, sowie aliphatische C₂- bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrechern auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE 2 940 024 A1 und DE 3 007 934 A1).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate zur Herstellung der Zusammensetzung liegt im Bereich 1,18 bis 1,4, vorzugsweise 1,20 bis 1,32, besonders bevorzugt 1,24 bis 1,30 (gemessen an Lösungen von 0,5 g Polycarbonat oder Polyestercarbonat in 100 ml Methylenchlorid-Lösung bei 25°C).

Das gewichtsgemittelte Molekulargewicht M_{w} der thermoplastischen, aromatischen Polycarbonate und der Polyestercarbonate liegt bevorzugt im Bereich von 15.000 bis 50.000 g/mol, weiter bevorzugt im Bereich 15.000 bis 35.000 g/mol, noch weiter bevorzugt im Bereich von 20.000 bis 33.000 g/mol, besonders bevorzugt im Bereich 23.000 bis 30.000 g/mol, bestimmt durch GPC (Gelpermeationschromatographie in Methylenchlorid mit Polycarbonat als Standard).

Erfindungsgemäß wird unter "Beschichtung" eine Schicht verstanden, die auf den Träger aufgebracht wird, wobei der Träger eine beliebige Gestalt aufweisen kann und nicht so verstanden werden soll, dass er auf (annähernd) plattenartige Formen begrenzt ist.

Als Material für die Ausbildung der zweiten Schicht kommen erfindungsgemäß Hart- und Weichlacke sowie Schäume, bevorzugt Polyurethanlacke, sowohl Hart- als auch Weichlacke, und Polyurethanschäume, besonders bevorzugt Hartlacke, in Frage. Auch Polyurethan-Häute können als zweite Schicht genutzt werden.

Bevorzugt enthält das Rohstoffgemisch zur Formung der zweiten Schicht mindestens eine Polyisocyanat-Komponente, mindestens eine H-aktive Verbindung und optional mindestens ein Polyurethan-Additiv und/oder Prozesshilfsstoff, wobei die zweite Schicht durch Auspolymerisieren dieses reaktiven Polyurethanrohstoffgemisches in direktem Kontakt mit dem zuvor aus der thermoplastischen Zusammensetzung geformten und erstarrten Träger hergestellt wird.

Unter dem Begriff "Polyurethan" werden erfindungsgemäß auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Als Beschichtung wird vorzugsweise ein Polyurethanschaum oder eine kompakte Polyurethanschicht eingesetzt.

Die erfindungsgemäß zum Einsatz kommenden Polyurethane erhält man durch Umsetzung von Polyisocyanaten mit H-aktiven polyfunktionellen Verbindungen, vorzugsweise Polyolen.

Dabei werden unter dem Begriff "Polyurethan" im Rahmen dieser Erfindung auch Polyurethanharnstoffe verstanden, bei denen als H-aktive polyfunktionelle Verbindungen solche Verbindungen mit N-H-Funktionalität gegebenenfalls in Abmischung mit Polyolen zum Einsatz kommen.

Geeignete Polyisocyanate sind die dem Fachmann an sich bekannten aromatischen, araliphatischen, aliphatischen oder cycloaliphatischen Polyisocyanate einer NCO-Funktionalität von bevorzugt ≥ 2, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur^{®} W, Bayer AG, Leverkusen, DE), 4-Isocyanatomethyl-1,8-octandiisocyanat (Triisocyanatononan, TIN), ω,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4- und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanato-methyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)-methanen sowie deren Mischungen.

Unter den höhermolekularen, modifizierten Polyisocyanaten sind insbesondere die aus der Polyurethanchemie bekannten Prepolymeren mit endständigen Isocyanatgruppen des Molekulargewichtsbereichs 400 bis 15.000 g/mol, vorzugsweise 600 bis 12.000 g/mol von Interesse. Diese Verbindungen werden in an sich bekannter Weise durch Umsetzung von überschüssigen Mengen an einfachen Polyisocyanaten der beispielhaft genannten Art mit organischen Verbindungen mit mindestens zwei gegenüber Isocyanatgruppen reaktionsfähigen Gruppen, insbesondere organischen Polyhydroxylverbindungen hergestellt. Geeignete derartige Polyhydroxylverbindungen sind sowohl einfache mehrwertige Alkohole des Molekulargewichtsbereichs 62 bis 599 g/mol, vorzugsweise 62 bis 200 g/mol, wie z.B. Ethylenglykol, Trimethylolpropan, Propandiol-1,2 oder Butandiol-1,4 oder Butandiol-2,3, insbesondere jedoch höhermolekulare Polyetherpolyole und/oder Polyesterpolyole der aus der Polyurethanchemie an sich bekannten Art mit Molekulargewichten von 600 bis 12.000 g/mol, vorzugsweise 800 bis 4.000 g/mol, die mindestens zwei, in der Regel 2 bis 8, vorzugsweise aber 2 bis 6 primäre und/oder sekundäre Hydroxylgruppen aufweisen. Selbstverständlich können auch solche NCO-Prepolymere eingesetzt werden, die beispielsweise aus niedermolekularen Polyisocyanaten der beispielhaft genannten Art und weniger bevorzugten Verbindungen mit gegenüber Isocyanatgruppen reaktionsfähigen Gruppen wie z.B. Polythioetherpolyolen, Hydroxylgruppen aufweisenden Polyacetalen, Polyhydroxypolycarbonaten, Hydroxylgruppen aufweisenden Polyesteramiden oder Hydroxylgruppen aufweisenden Copolymerisaten olefinisch ungesättigter Verbindungen erhalten worden sind.

Zur Herstellung der NCO-Prepolymere geeignete Verbindungen mit gegenüber Isocyanatgruppen reaktionsfähigen Gruppen, insbesondere Hydroxylgruppen, sind beispielsweise die in der US-A 4 218 543 offenbarten Verbindungen. Bei der Herstellung der NCO-Prepolymere werden diese Verbindungen mit gegenüber Isocyanatgruppen reaktionsfähigen Gruppen mit einfachen Polyisocyanaten der oben beispielhaft genannten Art unter Einhaltung eines NCO-Überschusses zur Umsetzung gebracht. Die NCO-Prepolymere weisen im Allgemeinen einen NCO-Gehalt von 10 bis 26 Gew.-% vorzugsweise 15 bis 26 Gew.-% auf. Hieraus geht bereits hervor, dass im Rahmen der vorliegenden Erfindung unter "NCO-Prepolymeren" bzw. unter "Prepolymeren mit endständigen Isocyanatgruppen" sowohl die Umsetzungsprodukte als solche als auch die Gemische mit überschüssigen Mengen an nicht umgesetzten Ausgangspolyisocyanaten, die oft auch als "Semiprepolymere" bezeichnet werden, zu verstehen sind.

Als aliphatische Diole mit einer OH-Zahl von >500 mg KOH/g kommen die üblicherweise in der Polyurethanchemie verwendeten Kettenverlängerer in Betracht wie Ethylenglykol, Diethylenglykol, Propylenglykol, Dipropylenglykol, Butandiol-1,4, Propandiol-1,3. Bevorzugt sind Diole wie Butandiol-1,4, 2-Butendiol-1,3, Butandiol-2,3 und/oder 2-Methylpropandiol-1,3. Selbstverständlich ist es auch möglich, die aliphatischen Diole im Gemisch untereinander einzusetzen.

Als H-aktive Komponente eignen sich Polyole mit einer mittleren OH-Zahl von 5 bis 600 mg KOH/g und einer mittleren Funktionalität von 2 bis 6. Bevorzugt sind Polyole mit einer mittleren OH-Zahl von 10 bis 50 mg KOH/g. Erfindungsgemäß geeignete Polyole stellen beispielsweise Polyhydroxypolyether dar, die durch Alkoxylierung geeigneter Startermoleküle wie Ethylenglykol, Diethylenglykol, 1,4-Dihydroxybutan, 1,6-Dihydroxyhexan, Dimethylolpropan, Glycerin, Pentaerythrit, Sorbit oder Saccharose zugänglich sind. Als Starter können ebenfalls fungieren Ammoniak oder Amine wie Ethylendiamin, Hexamethylendiamin, 2,4-Diaminotoluol, Anilin oder Aminoalkohole oder Phenole wie Bisphenol-A. Die Alkoxylierung erfolgt unter Verwendung von Propylenoxid und/oder Ethylenoxid in beliebiger Reihenfolge oder als Gemisch.

Neben Polyolen kann zusätzlich mindestens ein weiterer Vernetzer und/oder Kettenverlängerer enthalten sein, ausgewählt aus der Gruppe, die Amine und Aminoalkohole, beispielsweise Ethanolamin, Diethanolamin, Diisopropanolamin, Ethylendiamin, Triethanolamin, Isophorondiamin, N,N'-Dimethyl(diethyl)-ethylendiamin, 2-Amino-2-methyl(oder ethyl)-1-propanol, 2-Amino-1-butanol, 3-Amino-1,2-propandiol, 2-Amino-2-methyl(ethyl)-1,3-propandiol, und Alkohole, beispielsweise Ethylenglykol, Diethylenglykol, 1,4-Dihydroxybutan, 1,6-Dihydroxyhexan, Dimethylolpropan, Glycerin und Pentaerythrit, sowie Sorbit und Saccharose, oder Gemische dieser Verbindungen enthält.

Ferner geeignet sind Polyesterpolyole, wie sie durch Umsetzung niedermolekularer Alkohole mit mehrwertigen Carbonsäuren wie Adipinsäure, Phthalsäure, Hexahydrophthalsäure, Tetrahydrophthalsäure oder den Anhydriden dieser Säuren in an sich bekannter Weise zugänglich sind, sofern die Viskosität der H-aktiven Komponente nicht zu groß wird. Ein bevorzugtes Polyol, das Estergruppen aufweist, ist Rizinusöl. Daneben sind auch Zubereitungen mit Rizinusöl, wie sie durch Auflösung von Harzen, z.B. von Aldehyd-Keton-Harzen, erhalten werden können, sowie Modifikationen von Rizinusöl und Polyole auf Basis anderer natürlicher Öle geeignet.

Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden in an sich bekannter Weise z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen ablaufen lässt. Es ist aber auch möglich, eine fertige wässrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern oder Polycarbonatpolyolen erhalten werden, sind für die Herstellung von Polyurethanen geeignet. Bei Verwendung von Polyetherpolyolen, welche gemäß DE-A 2 442 101, DE-A 2 844 922 und DE-A 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält man Kunststoffe von besonderer Flammwidrigkeit.

Vertreter der genannten, als H-aktiven Verbindungen zu verwendenden Verbindungen sind z.B. in High Polymers, Vol. XVI, "Polyurethanes Chemistry and Technology", Saunders-Frisch (Hrg.) Interscience Publishers, New York, London, Bd. 1, S. 32-42, 44, 54 und Bd. II, 1984, S. 5-6 und S. 198-199 beschrieben.

Es können auch Gemische der aufgezählten Verbindungen eingesetzt werden.

Die Begrenzung der mittleren OH-Zahl und mittleren Funktionalität der H-aktiven Komponente ergibt sich insbesondere aus der zunehmenden Versprödung des resultierenden Polyurethans. Grundsätzlich sind dem Fachmann aber die Einflussmöglichkeiten auf die polymerphysikalischen Eigenschaften des Polyurethans bekannt, so dass NCO-Komponente, aliphatisches Diol und Polyol in günstiger Weise aufeinander abgestimmt werden können.

Die Polyurethanschicht (b) kann geschäumt oder massiv, wie z.B. als Lack oder Beschichtung vorliegen. Zu deren Herstellung können alle an sich bekannten Hilfs- und Zusatzstoffe, wie z.B. Trennmittel, Treibmittel, Füllstoffe, Katalysatoren und Flammschutzmittel, eingesetzt werden.

Gegebenenfalls als Hilfs- und Zusatzmittel sind dabei zu verwenden:

### a) Wasser und/oder leicht flüchtige anorganische oder organische Substanzen als Treibmittel

Als organische Treibmittel kommen z.B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel Luft, CO₂ oder N₂O in Frage. Eine Treibwirkung kann auch durch Zusatz von sich bei Temperaturen über Raumtemperatur unter Abspaltung von Gasen, beispielsweise von Stickstoff, zersetzenden Verbindungen, z.B. Azoverbindungen wie Azodicarbonamid oder Azoisobuttersäurenitril, erzielt werden.

### b) Katalysatoren

Bei den Katalysatoren handelt sich beispielsweise um tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol),
monocyclische und bicyclische Amide, Bis-(dialkylamino)alkylether,
Amidgruppen (vorzugsweise Formamidgruppen) aufweisende tertiäre Amine,
Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol),
gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ethylenoxid,
sekundäre Amine, tertiäre Amine,
Silaamine mit Kohlenstoff-Silicium-Bindungen (2,2,4-Trimethyl-2-silamorpholin und 1,3-Diethylaminomethyltetramethyldisiloxan),
stickstoffhaltige Basen (wie Tetraalkylammoniumhydroxide),
Alkalihydroxide (wie Natriumhydroxid, Alkaliphenolate wie Natriumphenolat),
Alkalialkoholate (wie Natriummethylat), und/oder
Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 bis 10 Gew.-%, bezogen auf die Gesamtmenge an Verbindungen mit mindestens zwei gegenüber Isocyanaten reaktionsfähigen Wasserstoffatomen, eingesetzt.

### c) Oberflächenaktive Zusatzstoffe wie Emulgatoren und Schaumstabilisatoren

Als Emulgatoren kommen z.B. die Natriumsalze von Rizinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder von Fettsäuren wie Rizinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im Allgemeinen so aufgebaut, dass ein Copolymerisat aus Ethylenoxid und Propylenoxid mit einem Polydimethylsiloxanrest verbunden ist. Von besonderem Interesse sind vielfach über Allophanatgruppen verzweigte Polysiloxan-Polyoxyalkylen-Copolymere.

### d) Reaktionsverzögerer

Als Reaktionsverzögerer kommen z.B. sauer reagierende Stoffe (wie Salzsäure oder organische Säurehalogenide) in Frage.

### e) Additive

Als PU-Additive kommen beispielsweise Zellregler der an sich bekannten Art (wie Paraffine oder Fettalkohole) oder Dimethylpolysiloxane sowie Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen sowie Füllstoffe (wie Bariumsulfat, Kieselgur, Ruß oder Schlämmkreide) in Betracht.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sind dem Fachmann bekannt und in der Literatur beschrieben.

Bei geschäumten Strukturen liegt die Schichtdicke der zweiten Schicht bevorzugt zwischen 0,5 mm und 40 mm, weiter bevorzugt zwischen 0,75 mm und 20 mm, besonders bevorzugt zwischen 1 mm und 15 mm.

Bei kompakten Strukturen liegt die Schichtdicke der zweiten Schicht bevorzugt zwischen 0,05 mm und 10 mm, weiter bevorzugt zwischen 0,1 mm und 8 mm, besonders bevorzugt zwischen 0,15 mm und 5 mm.

Wenn die Dicke der zweiten Schicht in der Größenordnung der Tiefe der Narbung liegt, bildet sich die Struktur auf der Oberfläche des Trägers teilweise in der zweiten Schicht ab. Zur Erzielung einer glatten Oberfläche kann auf die zweite Schicht eine weitere Schicht aufgetragen werden.

Die Verbundhaftung zwischen dem Träger aus Thermoplast, bevorzugt aus Polycarbonat oder Polycarbonat-Blend, und der zweiten Schicht, bevorzugt eine Polyurethan-Beschichtung in Form eines Lacks oder eines Schaumes, in den erfindungsgemäßen Verbundteilen beträgt bevorzugt mindestens 0,3 N/mm, besonders bevorzugt mindestens 1,0 N/mm, gemessen an aus dem Bauteil entnommenen Streifenproben mit einer Breite von 25 mm in einem Rollenschälversuch gemäß DIN EN 1464 mit einer Prüfgeschwindigkeit von 100 mm/min.

Wenn geschäumte Verbunde hergestellt werden sollen, kann in an sich bekannter Weise das Reaktionsgemisch in eine Form, enthaltend den vorab geformten und erstarrten Träger, eingetragen werden. In der Form schäumt das schaumfähige Reaktionsgemisch der zweiten Schicht in Kontakt mit dem Trägerbauteil auf und bildet das Verbundbauteil. Die Formverschäumung kann dabei so durchgeführt werden, dass das Verbundbauteil an seiner Oberfläche eine Zellstruktur aufweist. Sie kann aber auch so durchgeführt werden, dass das Verbundbauteil eine kompakte Haut und einen zelligen Kern aufweist (Integralschaumstoffe). Polyurethanschaumstoffe können auch als Block-Schaumstoff hergestellt werden.

Im Folgenden werden zum besseren Verständnis anhand der Figuren 1 und 2 das erfindungsgemäße Verfahren zur Herstellung der erfindungsgemäß erhältlichen Verbundteile und anhand der Figuren 3 bis 28 bevorzugte Strukturen, welche sich mit Hilfe des Verfahrens auf die Trägerschicht aufbringen lassen, näher erläutert.

Es zeigen:

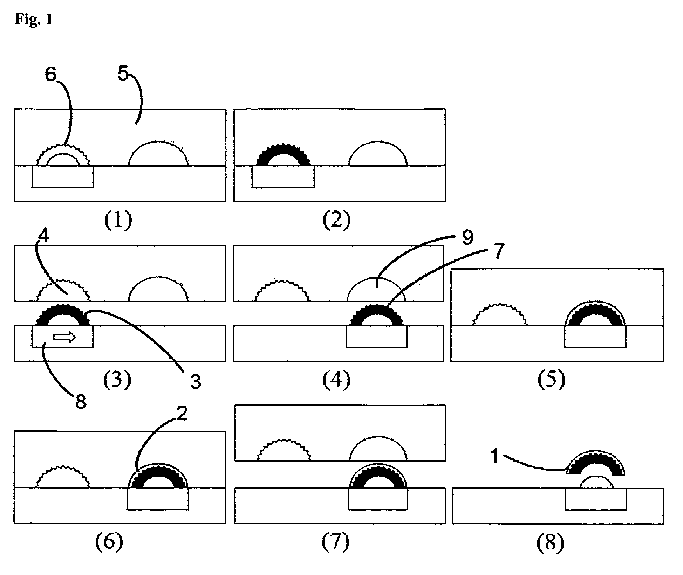

- **Fig. 1:**: das erfindungsgemäße Verfahren zur Herstellung eines Verbundteils;

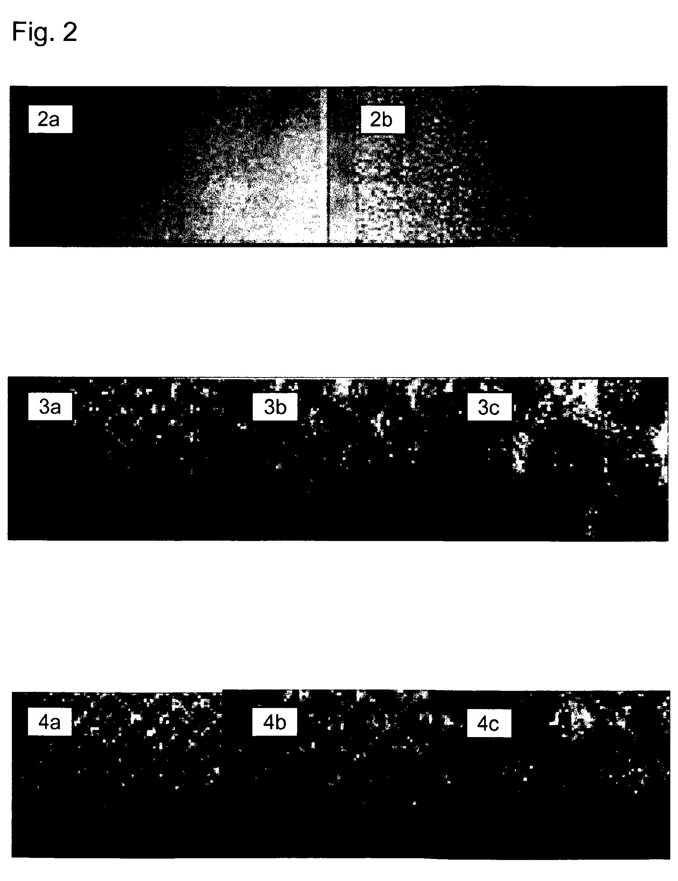

- **Fig. 2:**: Strukturen auf der Werkzeugoberfläche;

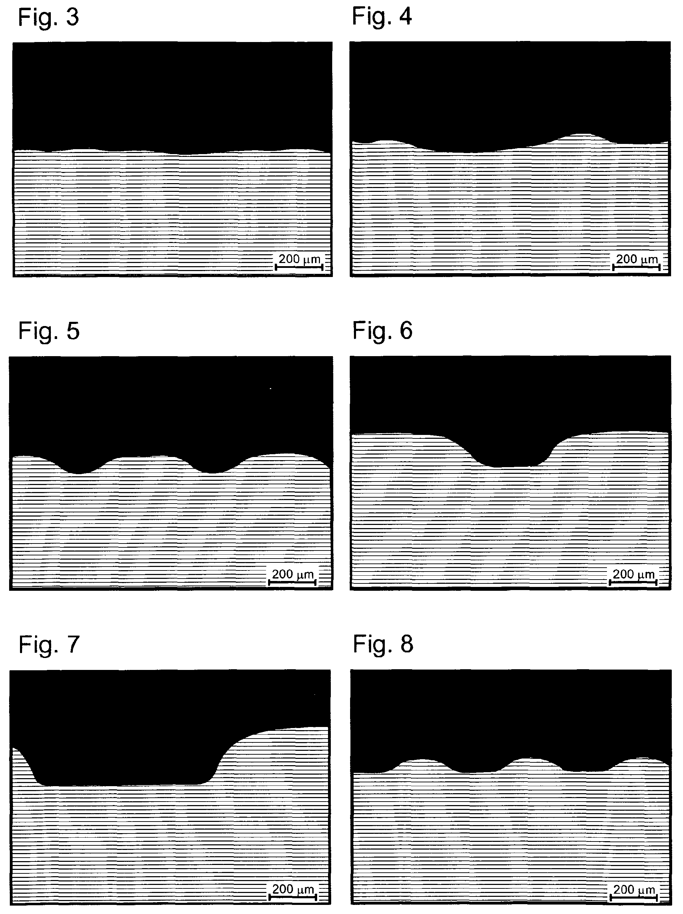

- **Fig. 3:**: nachgezeichnetes Mikroskopiebild: Querschnitt Polyurethan-beschichteter Träger aus Bayblend® T85 SG (Polycarbonat/ABS-Blend) mit Erodierstruktur, VDI 33;
- **Fig. 4:**: nachgezeichnetes Mikroskopiebild: Querschnitt Polyurethan-beschichteter Träger aus Bayblend® T85 SG (Polycarbonat/ABS-Blend) mit Erodierstruktur, VDI 42;

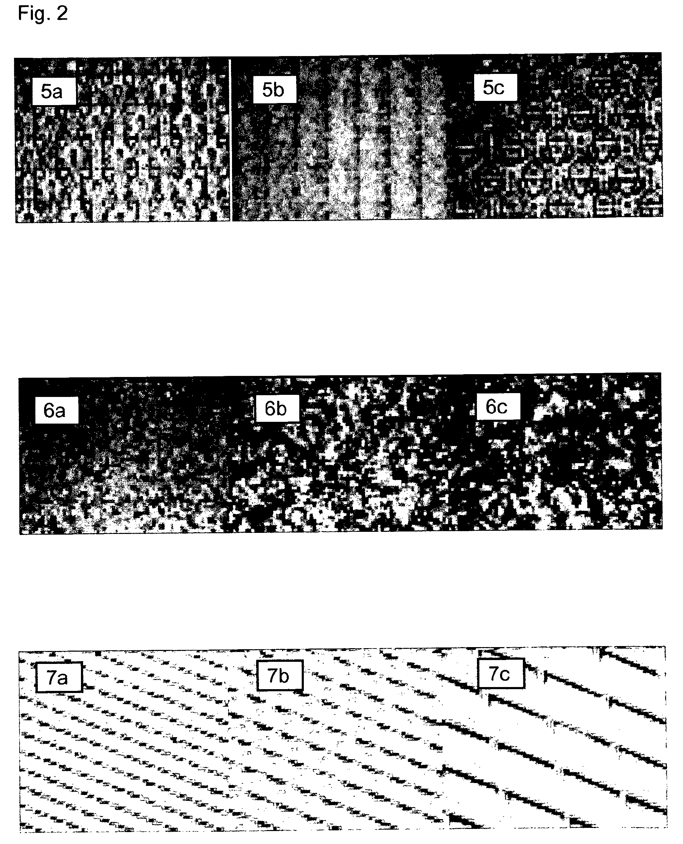

- **Fig. 5:**: nachgezeichnetes Mikroskopiebild: Querschnitt Polyurethan-beschichteter Träger aus Makroblend® UT6405 SG (Polycarbonat/Polyester-Blend) mit Punktstruktur 3a;
- **Fig. 6:**: nachgezeichnetes Mikroskopiebild: Querschnitt Polyurethan-beschichteter Träger aus Makroblend® UT6405 SG (Polycarbonat/Polyester-Blend) mit Punktstruktur 3b;
- **Fig. 7:**: nachgezeichnetes Mikroskopiebild: Querschnitt Polyurethan-beschichteter Träger aus Makroblend® UT6405 SG (Polycarbonat/Polyester-Blend) mit Punktstruktur 3c;
- **Fig. 8:**: nachgezeichnetes Mikroskopiebild: Querschnitt Polyurethan-beschichteter Träger aus Bayblend® T85 SG (Polycarbonat/ABS-Blend) mit Rautenstruktur 4a;

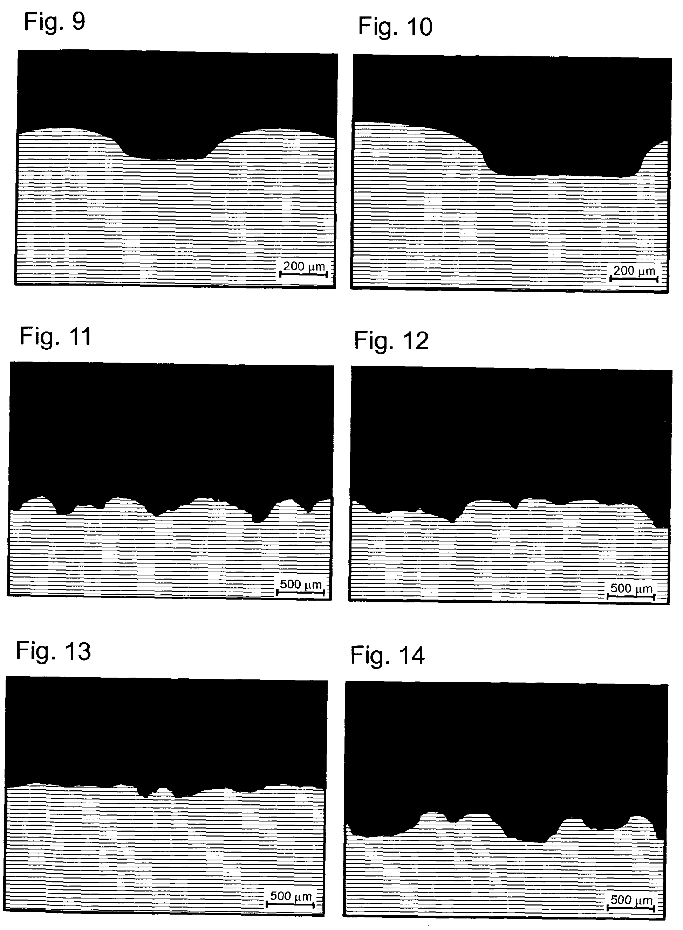

- **Fig. 9:**: nachgezeichnetes Mikroskopiebild: Querschnitt Polyurethan-beschichteter Träger aus Bayblend® T85 SG (Polycarbonat/ABS-Blend) mit Rautenstruktur 4b;
- **Fig. 10:**: nachgezeichnetes Mikroskopiebild: Querschnitt Polyurethan-beschichteter Träger aus Bayblend® T85 SG (Polycarbonat/ABS-Blend) mit Rautenstruktur 4c;
- **Fig. 11:**: nachgezeichnetes Mikroskopiebild: Querschnitt Polyurethan-beschichteter Träger aus Bayblend® T85 SG (Polycarbonat/ABS-Blend) mit Struktur 5a;
- **Fig. 12:**: nachgezeichnetes Mikroskopiebild: Querschnitt Polyurethan-beschichteter Träger aus Bayblend® T85 SG (Polycarbonat/ABS-Blend) mit Struktur 5c;
- **Fig. 13:**: nachgezeichnetes Mikroskopiebild: Querschnitt Polyurethan-beschichteter Träger aus Bayblend® T85 SG (Polycarbonat/ABS-Blend) mit Struktur 5b;
- **Fig. 14:**: nachgezeichnetes Mikroskopiebild: Querschnitt Polyurethan-beschichteter Träger aus Makroblend® UT6405 SG (Polycarbonat/Polyester-Blend) mit Struktur 5a;

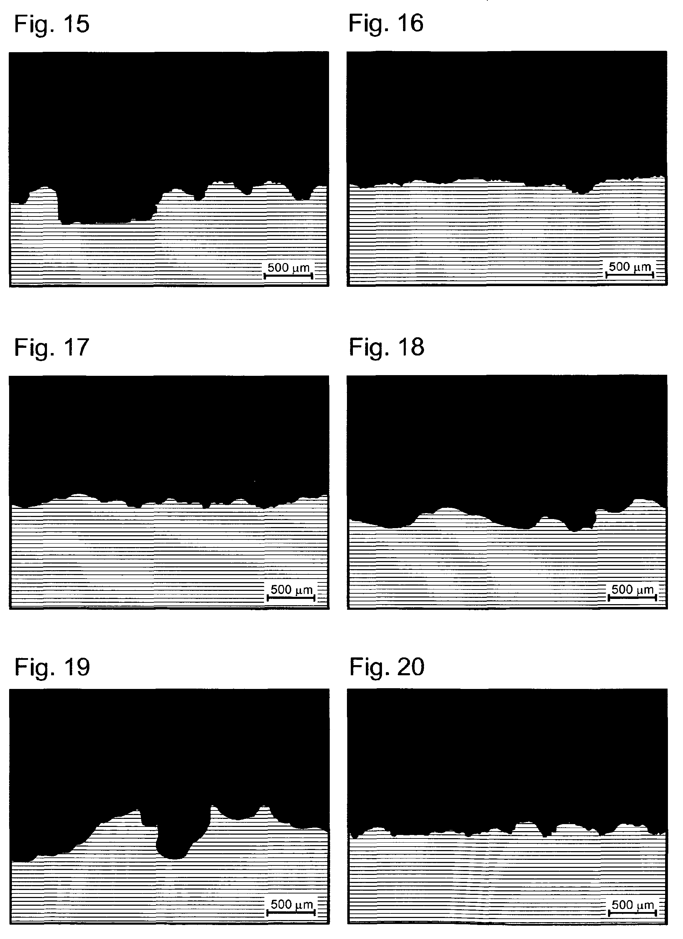

- **Fig. 15:**: nachgezeichnetes Mikroskopiebild: Querschnitt Polyurethan-beschichteter Träger aus Makroblend® UT6405 SG (Polycarbonat/Polyester-Blend) mit Struktur 5c;
- **Fig. 16:**: nachgezeichnetes Mikroskopiebild: Querschnitt Polyurethan-beschichteter Träger aus Makroblend® UT6405 SG (Polycarbonat/Polyester-Blend) mit Struktur 5b;
- **Fig. 17:**: nachgezeichnetes Mikroskopiebild: Querschnitt Polyurethan-beschichteter Träger aus Bayblend® T85 SG (Polycarbonat/ABS-Blend) mit Schleifpapierstruktur 6a;
- **Fig. 18:**: nachgezeichnetes Mikroskopiebild: Querschnitt Polyurethan-beschichteter Träger aus Bayblend® T85 SG (Polycarbonat/ABS-Blend) mit Schleifpapierstruktur 6b;
- **Fig**. **19:**: nachgezeichnetes Mikroskopiebild: Querschnitt Polyurethan-beschichteter Träger aus Bayblend® T85 SG (Polycarbonat/ABS-Blend) mit Schleifpapierstruktur 6c;
- **Fig**. **20:**: nachgezeichnetes Mikroskopiebild: Querschnitt Polyurethan-beschichteter Träger aus Makroblend® UT6405 SG (Polycarbonat/ABS-Blend) mit Schleifpapierstruktur 6a;

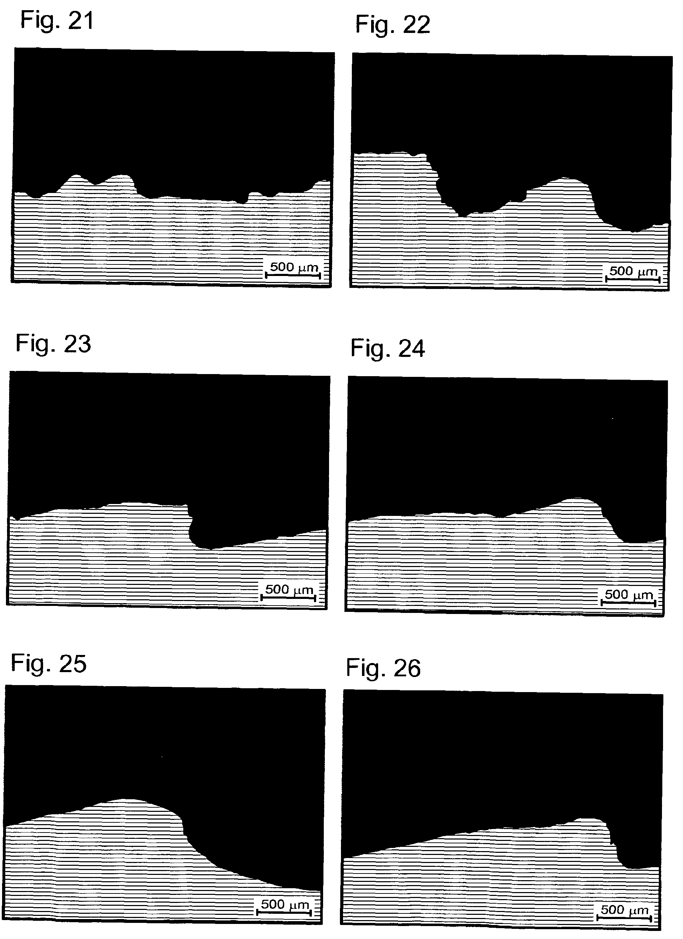

- **Fig. 21:**: nachgezeichnetes Mikroskopiebild: Querschnitt Polyurethan-beschichteter Träger aus Makroblend® UT6405 SG (Polycarbonat/ABS-Blend) mit Schleifpapierstruktur 6b;
- **Fig. 22:**: nachgezeichnetes Mikroskopiebild: Querschnitt Polyurethan-beschichteter Träger aus Makroblend® UT6405 SG (Polycarbonat/ABS-Blend) mit Schleifpapierstruktur 6c;
- **Fig. 23:**: nachgezeichnetes Mikroskopiebild: Querschnitt Polyurethan-beschichteter Träger aus Bayblend® T85 SG (Polycarbonat/ABS-Blend) mit Feilenstruktur 7a;
- **Fig. 24:**: nachgezeichnetes Mikroskopiebild: Querschnitt Polyurethan-beschichteter Träger aus Bayblend® T85 SG (Polycarbonat/ABS-Blend) mit Feilenstruktur 7b;
- **Fig. 25:**: nachgezeichnetes Mikroskopiebild: Querschnitt Polyurethan-beschichteter Träger aus Bayblend® T85 SG (Polycarbonat/ABS-Blend) mit Feilenstruktur 7c;
- **Fig. 26:**: nachgezeichnetes Mikroskopiebild: Querschnitt Polyurethan-beschichteter Träger aus Makroblend® UT6405 SG (Polycarbonat/ABS-Blend) mit Feilenstruktur 7a;

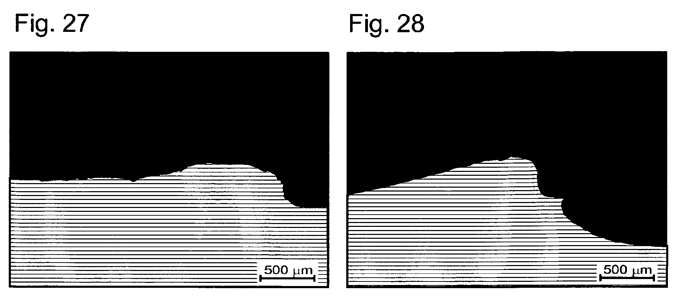

- **Fig. 27:**: nachgezeichnetes Mikroskopiebild: Querschnitt Polyurethan-beschichteter Träger aus Makroblend® UT6405 SG (Polycarbonat/ABS-Blend) mit Feilenstruktur 7b;
- **Fig. 28:**: nachgezeichnetes Mikroskopiebild: Querschnitt Polyurethan-beschichteter Träger aus Makroblend® UT6405 SG (Polycarbonat/ABS-Blend) mit Feilenstruktur 7c.

Figur 1 zeigt das erfindungsgemäße Verfahren zur Herstellung der erfindungsgemäßen Verbundbauteile 1, wobei beispielhaft für die Beschichtung (zweite Schicht) 2 von einer Polyurethan-Beschichtung gesprochen wird. Im ersten Verfahrensschritt erfolgt eine Herstellung des Trägers 3. Hierzu wird das thermoplastische Kunststoffgranulat in einem Spritzgießzylinder aufgeschmolzen und bei einer Temperatur von 270°C in die erste Werkzeugkavität 4 des geschlossenen Werkzeugs 5 eingespritzt (Schritte 1 und 2 in Figur 1). Diese erste Werkzeugkavität 4 wird bevorzugt auf 70 bis 90°C temperiert. Die Wände des Werkzeugs 5, welche diese Kavität 4 umhüllen, weisen mindestens teilweise strukturierte Oberflächen 6 auf, welche sich auf dem Träger abbilden (Struktur 7 auf Trägeroberfläche). Nach Ablauf der Nachdruckzeit und Kühlzeit, während der sich der Träger 3 verfestigt, wird in einem weiteren Verfahrensschritt das Werkzeug 5 geöffnet (Schritt 3 in Figur 1). Dabei wird der Träger 3, der mindestens teilweise eine strukturierte Oberfläche 7 aufweist, auf der Auswerferseite des Spritzgießwerkzeugs 5 gehalten und von der Träger-Position komplett mit dem Werkzeugkern über einen Schieber 8 in die Beschichtungs-Position (Schritt 4 in Figur 1) verfahren. Das Spritzgießwerkzeug 5 wird erneut geschlossen (Schritt 5 in Figur 1), eine Schließkraft wird aufgebaut und im nächsten Verfahrensschritt wird das reaktive Beschichtungssystem unter einem Druck von im Allgemeinen bis zu 200 bar in die Beschichtungskavität 9 eingespritzt (Schritt 6 in Figur 1). Die reaktiven Komponenten des Beschichtungssystems werden dabei von der RIM-Anlage in einen Hochdruckgegenstrommischkopf gefördert und vor dem Einspritzen dort vermischt. Die Beschichtungs-seitige Kavität wird dabei bevorzugt auf eine Temperatur von 70 bis 100°C temperiert. Nach dem Ende des Einspritzens wird bevorzugt die Einspritzdüse des Mischkopfs für die Beschichtungszusammensetzung mittels eines Hydraulikzylinders versiegelt, um ein Zurückströmen des Beschichtungsmaterials zu verhindern. Nach Ablauf der Reaktions- und Kühlzeit wird in einem weiteren Verfahrensschritt das Werkzeug 5 erneut geöffnet (Schritt 7 in Figur 1) und das beschichtete Formteil (Verbundteil) 1 entformt (Schritt 8 in Figur 1).

Figur 2 zeigt verschiedene Strukturierungen, welche zur Verbesserung der Haftung zwischen dem Träger und der Beschichtung genutzt werden können. Aufgrund der besseren Abbildbarkeit wurde teilweise nicht der thermoplastische Träger mit strukturierter Oberfläche fotografiert, sondern stattdessen das Werkzeug, das die erste Kavität bildet, in welche der Thermoplast zur Aushärtung eingespritzt wird.

Nicht abgebildet ist die herkömmliche Oberflächenstruktur eines thermoplastischen Trägers, der in einem Werkzeug mit glatter innerer Oberfläche hergestellt wurde. Die Oberflächenstruktur eines solchen Trägers ist ebenfalls glatt. Ein Träger mit einer solchen herkömmlichen Oberfläche wurde für die Vergleichsversuche herangezogen.

Die Strukturen 2a und 2b zeigen verschiedene Oberflächen der Werkzeugoberfläche. Die Struktur 2a entsteht durch Fein-Erodierung (VDI 33) der Oberfläche, die Struktur 2b durch Grob-Erodierung (VDI 42). Die Strukturen 3a, 3b und 3c sind Punktraster mit einer Strukturtiefe von 85 µm, 150 µm bzw. 250 µm. Bei den Strukturen 4a, 4b und 4c handelt es sich um Rautenraster mit einer Strukturtiefe von 70 µm, 150 µm bzw. 250 µm. Die nachfolgend beschriebenen Strukturen der Werkzeugoberflächen wurden durch das Verpressen eines Silikonabdruckes einer entsprechenden Struktur (beispielsweise eines Mikrofasertuches) in die noch nicht ausgehärtete keramische Oberfläche erhalten, die anschließend ausgehärtet wurde. Die Strukturen 5a, 5b und 5c sind textilen Strukturen nachempfunden. Die Strukturen 5a und 5c entstehen beispielsweise durch Prägung mitverschiedenen Sitzbezügen. Die Struktur 5b weist die Struktur eines Mikrofasertuches auf. Die Strukturen 6a, 6b und 6c sind Schleifpapierstrukturen, und zwar die von feinem Schleifpapier mit 180er Körnung (Struktur 6a), von mittlerem Schleifpapier mit 60er Körnung (Struktur 6b) und von grobem Schleifpapier mit 40er Körnung (Struktur 6c). Die Strukturen 7a, 7b und 7c sind Feilenstrukturen. Struktur 7a ist eine Flachstumpffeilenstruktur Hieb 1 (feiner Hieb). Diese wird ebenfalls wie zuvor für die Struktur 5b beschrieben erhalten. Die Struktur 7b ergibt sich entsprechend durch eine Flachstumpffeile Hieb 2 (mittlerer Hieb). Die Struktur 7c ergibt sich durch eine gefräste Feile mit Hieb 2 (grobe Feile).

Die Figuren 3 bis 28 zeigen nachgezeichnete Prinzipskizzen von Mikroskopiebildern von Querschnitten durch die Schichten verschiedener Verbundteile, die einen Träger aus Bayblend® T85 SG (Polycarbonat/Acrylnitril-Butadien-Styrol-Copolymerisat-Blend) oder Makroblend® UT 6405 SG (Polycarbonat/Polyester-Blend), unterschiedliche Strukturierungen und eine Polyurethanlack-Beschichtung aufweisen. Die Herstellung der Verbundteile erfolgte wie nachstehend unter "Beispiele" beschrieben. Die Strukturen, welche zur Gestaltung der mit dem Polyurethanlack in Kontakt tretenden Oberflächen verwendet bzw. geprägt wurden, entsprechen den in Figur 2 gezeigten.

Die Mikroskopiebilder wurden mit dem Gerät Axioplan der Firma Zeiss aufgenommen. Bei einer 50-fachen Vergrößerung entstanden die Fig. 11 bis Fig. 28 und einer 100-fachen Vergrößerung die Fig. 3 bis 10. Alle diese Figuren (Fig. 3 bis Fig. 28) wurden mittels Auflicht und Dunkelfeld erzeugt.

Die Figuren 3 und 4 zeigen Schnittbilder der abgeformten Erodierstrukuren nach VDI 33 bzw. VDI 44. Sie sind gekennzeichnet durch unregelmäßige, weiche, wellenartigen Erhöhungen der Oberfläche. Es sind keine scharfen Kanten und kleinen Radien vorhanden. Mit einem Finger darübergestrichen fühlt sich die Struktur aus Figur 3 glatt und eben an, die Struktur aus Figur 4 fühlt sich glatt, aber uneben an.

Die Figuren 5 bis 7 zeigen die Schnittbilder einer Punktrasterstruktur. Sie sind gekennzeichnet durch einen regelmäßigen Aufbau. Die Struktur aus Figur 5 mit einer mittleren Strukturtiefe von 85 µm zeichnet sich durch halbkreisförmige Täler und abgerundete Plateaus mit ca. 300 µm Breite aus. Die Radien am Fuße der Punktstruktur sind bei der Struktur aus Figur 6 mit im Mittel 150 µm Strukturtiefe deutlich kleiner als bei der Struktur aus Figur 5 und bei Figur 7 mit im Mittel 250 µm Strukturtiefe am kleinsten. Bei allen Punktrasterstrukturen sind keine scharfen Kanten oder hinterschnittigen Strukturen zu erkennen. Charakteristisch ist eine glatte Linienführung.

Die Figuren 8 bis 10 zeigen die Schnittbilder der Rautenstruktur, welche im Schnitt von der Seite betrachtet mit den Strukturen aus den Figuren 5 bis 7 vergleichbar sind. In der Draufsicht in Fig. 2 erkennt man die Rauten.

Die Schnittbilder der abgeformten Textilien sind in den Figuren 11 bis 16 dargestellt. Die Strukturen sind gekennzeichnet durch eine unregelmäßige, zerklüftete Oberfläche. Die Radien der Strukturen sind klein bis scharfkantig, die Linienführung der Oberfläche ist unregelmäßig und weist Sprünge auf. Teilweise sind hinterschnittige Strukturen zu erkennen.

Die Figuren 20 bis 22 zeigen die Schnittbilder der Schleifpapier-Strukturen in verschiedenen Körnungen. Alle Strukturen sind charakterisiert durch eine unregelmäßige, raue Oberfläche mit teilweise hinterschnittigen Strukturen. Besonders bei der gröbsten Struktur in Figur 22 sind sehr steile Flanken zu erkennen.

Die Figuren 23 bis 28 zeigen die Strukturen der Feilengeometrie. Die Oberfläche ist gekennzeichnet durch regelmäßige, relativ glatte Strukturen. Dabei sind die Winkel der Feilenzähne dadurch gekennzeichnet, dass eine Seite jeweils sehr flach ausgebildet ist und die andere Seite fast senkrecht zur Oberfläche abfällt, teilweise leicht hinterschnittig. Die Tiefe der Erhöhungen eines einzelnen Feilenzahnes ist mit teilweise über 500 µm relativ hoch gegenüber den anderen Strukturen.

### Beispiele

Die aus der jeweiligen Compoundierung resultierenden Granulate wurden der Spritzgießmaschine vom Typ Battenfeld HM270/1330 S Unilog B4 zugeführt.

Es wurden partiell oberflächig beschichtete Formteile mit einer projizierten Fläche von ca. 200 (Länge: ca. 163 mm, Breite: ca. 125 mm) cm² auf der Spritzgießmaschine in einem Spritzgießwerkzeug mit zwei Kavitäten (einer substratseitigen Kavität und einer polyurethanseitigen Beschichtungskavität, die mit einer RIM-Anlage verknüpft war) hergestellt, wie in Figur 1 dargestellt und zuvor beschrieben. Bei dem Verbundteil handelt es sich um ein plattenförmiges Bauteil aus thermoplastischem Kunststoff (Träger), dessen Fläche partiell mit einem Polyurethanlack beschichtet wurde. Die Wanddicke des Trägerformteils betrug ca. 4 mm. Die Polyurethanschichtdicke betrug ca. 0,3 mm.

Für den Träger wurde als thermoplastisches Material eines der folgenden verwendet:
- Bayblend® T85 SG (Polycarbonat/Acrylnitril-Butadien-Styrol-Copolymerisat-Blend) von Bayer MaterialScience AG, Leverkusen, Deutschland;
- Makroblend® UT 6405 SG (Polycarbonat/Polyester-Blend) von Bayer MaterialScience AG, Leverkusen, Deutschland.

Makroblend®, also Polycarbonat/Polyester-Blend, dessen Oberfläche nicht strukturiert wurde, zeigt im Vergleich zu einem Polycarbonat-Blend mit ABS eine wesentlich bessere Haftung. Um den Effekt der Strukturierung überhaupt untersuchen zu können, war es erforderlich, den Polycarbonat/Polyester-Blend (Makroblend® UT 6405 SG) so vorzubehandeln, dass sich ein Effekt beobachten lässt. Hierzu wurde der Träger aus Makroblend® UT 6405 SG zunächst über einen Zeitraum von 48 Stunden auf 60°C temperiert und anschließend über drei Zyklen im Temperaturwechseltest, in einem Klimaschrank Typ PL-4KPH der Firma Espec, gealtert. Bei Trägern aus Bayblend® T85 SG erfolgte hingegen nur im Falle der Strukturen 3c und 4c eine Vorbehandlung, ebenfalls über einen Zeitraum von 48 Stunden bei 60°C, mit anschließender Alterung über drei Zyklen im Temperaturwechseltest.

Jeder Alterungszyklus umfasste folgendes Temperaturprofil: 15 h bei 105°C, dann 30 min bei 23 ± 2°C, dann 8 h bei -40°C, dann 30 min bei 23 ± 2°C.

Als Material für die Beschichtung wurde ein reaktives Polyurethanrohstoffgemisch eingesetzt, bei dem es sich um eine Mischung der folgenden Komponenten handelte:
- Desmophen® XP 2488 (ein verzweigtes Polyesterpolyol, enthaltend 1,4'-Bishydroxymethyl-cyclohexan) von Bayer MaterialScience AG, Leverkusen, Deutschland,
- Desmodur® N 3600 (ein aliphatisches Polyisocyanat, und zwar niedrigviskoses Hexamethylen-1,6-diisocyanat-Trimerisat, molare Masse: 504 g/mol) von Bayer MaterialScience AG, Leverkusen,
- 0,5% Dibutylzinndilaurat.

Die Verbund-Haftung zwischen dem Träger und der Polyurethan-Beschichtung wurde an Streifenproben mit einer Probe von 25 mm, welche aus den so hergestellten, partiell PUbeschichteten 2-Komponenten-Verbundplatten gesägt wurden, durch einen Rollenschälversuch gemäß DIN EN 1464 mit einer Prüfgeschwindigkeit von 100 mm/min ermittelt.

**Tabelle 1: Einfluss der Oberflächenstruktur des Trägers auf die Haftung der Beschichtung**

| | **Haftung [N/mm]** |
|---|---|
| ohne Strukturierung, | 0,41 |
| Bayblend® T85 SG | |
| Struktur 3a, Punktraster 85 µm | 0,85 |
| Bayblend® T85 SG | |
| Struktur 3b, Punktraster 150 µm | 1,78 |
| Bayblend® T85 SG | |
| Struktur 3c, Punktraster 250 µm | hervorragende Haftung |
| Bayblend® T85 SG | |
| Struktur 4a, Rautenraster 70 µm | 0,45 |
| Bayblend® T85 SG | |
| Struktur 4b, Rautenraster 150 µm | 0,70 |
| Bayblend® T85 SG | |
| Struktur 4c, Rautenraster 250 µm | hervorragende Haftung |
| Bayblend® T85 SG | |
| ohne Strukturierung, | 0,14 |
| Makroblend® UT 6405 SG | |
| Struktur 2a, Erodierstruktur, VDI 33, | 0,19 |
| Makroblend® UT 6405 SG | |
| Struktur 2b, Erodierstruktur VDI 42, | 0,20 |
| Makroblend® UT 6405 SG | |
| Struktur 3a, Punktraster 85 µm | 0,25 |
| Makroblend® UT 6405 SG | |
| Struktur 3b, Punktraster 150 µm | hervorragende Haftung |
| Makroblend® UT 6405 SG | |
| Struktur 3c, Punktraster 250 µm | hervorragende Haftung |
| Makroblend® UT 6405 SG | |
| Struktur 4a, Rautenraster 70 µm | 0,23 |
| Makroblend® UT 6405 SG | |
| Struktur 4b, Rautenraster 150 µm | 0,42 |
| Makroblend® UT 6405 SG | |
| Struktur 4c, Rautenraster 250 µm | 0,48 |
| Makroblend® UT 6405 SG | |

Aus der Tabelle ist ersichtlich, dass jegliche Strukturierung überraschenderweise zu einer deutlichen Verbesserung der Haftung zwischen Träger und Beschichtung führt. Bei Prägung von Makroblend® UT 6405 SG nach Alterung mit einem Punktmuster mit einer Rastertiefe von 150 bzw. 250 µm (Strukturen 3b und 3c) und von Bayblend® T85 SG mit einem Punktmuster oder mit einem Rautenmuster mit jeweils einer Rastertiefe von 250 µm (Struktur 3c bzw. Struktur 4c) ist die Haftungsverbesserung sogar so hervorragend, dass sich die verwendete Polyurethanbeschichtung im Rollenschälversuch nicht mehr von dem Träger aus thermoplastischem Kunststoff entfernen lässt.

Im Falle der Strukturierung der Oberflächen der Träger mit den Strukturen 5a, 5b, 5c, 6a, 6b, 6c, 7a, 7b, 7c wurde hierdurch eine so hervorragende Verbesserung der Haftung zwischen Träger und Beschichtung erzielt, dass es sowohl bei dem Polycarbonat/ABS-Blend (Bayblend® T85 SG) als auch bei dem Polycarbonat/Polyester-Blend (Makroblend® UT 6405 SG) selbst bei 6 Alterungszyklen im Temperaturwechseltest nicht möglich war, die Polyurethan-Beschichtung im Rollenschälversuch von dem thermoplastischen Träger zu lösen.

## Patentansprüche

1. Verfahren zur Herstellung eines Verbundbauteils umfassend
- einen Träger aus einer thermoplastischen Zusammensetzung, welche ausgewählt wird aus der Gruppe, bestehend aus Polycarbonaten und Polycarbonat-Blends, und
- eine zweite Schicht auf dem Träger,
wobei die an die zweite Schicht angrenzende Fläche des Trägers strukturiert ist,
wobei das Verfahren die folgenden Schritte umfasst, die in dieser Reihenfolge aufeinander folgen:
(i) Einspritzen der Schmelze der thermoplastischen Zusammensetzung, welche ausgewählt wird aus der Gruppe, bestehend aus Polycarbonaten und Polycarbonat-Blends, in eine erste Werkzeugkavität zur Herstellung des thermoplastischen Trägers,
(ii) Abkühlen der Schmelze,
(iii) Vergrößerung der Kavität des Spritzgusswerkzeugs zur Erzeugung eines Spaltraumes,
(iv) Einspritzen eines Rohstoffgemisches zur Formung der zweiten Schicht in diesen Spaltraum zwischen dem thermoplastischen Träger und der Werkzeugoberfläche, wobei das Rohstoffgemisch zur Formung der zweiten Schicht im direkten Kontakt mit der Oberfläche des thermoplastischen Trägers auspolymerisiert,
(v) Entformung des Verbundteils aus der Werkzeugkavität,
**dadurch gekennzeichnet, dass** das Werkzeug, in welches die thermoplastische Zusammensetzung eingespritzt wird, auf seiner inneren Oberfläche eine von einer glatten Oberfläche abweichende Struktur aufweist, durch welche die Oberfläche des thermoplastischen Trägers eine Struktur erhält, wobei die Struktur entweder ein Punkraster mit einer Strukturtiefe von 85 µm, 150 µm oder 250 µm oder ein Rautenraster mit einer Strukturtiefe von 70 µm, 150 µm oder 250 µm ist.

2. Verfahren nach Anspruch 1,
**dadurch gekennzeichnet, dass** das Werkzeug, das zur Herstellung des thermoplastischen Trägers verwendet wird, eine keramische Oberfläche umfasst.

3. Verfahren nach einem der Ansprüche 1 oder 2,
**dadurch gekennzeichnet, dass** das Werkzeug die Struktur auf seiner Oberfläche durch Prägung, Fräsen, Erodieren und/oder Lasern erhalten hat.

4. Verfahren nach einem der vorhergehenden Ansprüche,
**dadurch gekennzeichnet, dass** die Struktur in der Oberfläche des Trägers durch Prägung mit einem Werkzeug erhalten wurde.

5. Verfahren nach einem der vorhergehenden Ansprüche,
**dadurch gekennzeichnet, dass** das Rohstoffgemisch zur Formung der zweiten Schicht
- mindestens eine Polyisocyanat-Komponente,
- mindestens eine H-aktive Verbindung und
- optional mindestens ein Polyurethan-Additiv und/oder Prozesshilfsstoff enthält.

6. Verfahren nach einem der vorhergehenden Ansprüche, **dadurch gekennzeichnet, dass** die zweite Schicht eine Beschichtung aus einem Polyurethan-Hartlack, Polyurethan-Weichlack, einer Polyurethan-Haut oder einem Polyurethan-Schaum ist.

7. Verfahren nach einem der vorhergehenden Ansprüche, **dadurch gekennzeichnet, dass** die Struktur ein Punkraster oder ein Rautenraster mit einer Strukturtiefe von 250 µm ist.

## Claims

1. Process for the production of a composite component comprising
- a support made of a thermoplastic composition selected from the group consisting of polycarbonates and polycarbonate blends, and
- a second layer on the support,
where that area of the support that adjoins the second layer has structuring,
where the process comprises the following steps following one another in this sequence:
(i) injection of the melt of thermoplastic composition selected from the group consisting of polycarbonates and polycarbonate blends into a first mould cavity for the production of the thermoplastic support,
(ii) cooling of the melt,
(iii) enlargement of the cavity of the injection mould to produce an unoccupied space,
(iv) injection of a raw material mixture for the moulding of the second layer into the said unoccupied space between the thermoplastic support and the mould surface, where the raw material mixture for the moulding of the second layer polymerizes to completion in direct contact with the surface of the thermoplastic support,
(v) demoulding the composite part from the mould cavity,
**characterized in that** the mould into which the thermoplastic composition is injected has, on its inner surface, a structure which differs from a smooth surface and which provides a structure to the surface of the thermoplastic support, where the structure is either a dot matrix with structure depth 85 µm, 150 µm or 250 µm or a rhomboid matrix with structure depth 70 µm, 150 µm or 250 µm.

2. Process according to Claim 1,
**characterized in that** the mould used for the production of the thermoplastic support comprises a ceramic surface.

3. Process according to Claim 1 or 2,
**characterized in that** the mould has obtained the structure on its surface via embossing, milling, erosion and/or laser treatment.

4. Process according to any of the preceding claims, **characterized in that** the structure has been obtained in the surface of the support via embossing with a mould.

5. Process according to any of the preceding claims,
**characterized in that** the raw material mixture for the moulding of the second layer comprises
- at least one polyisocyanate component,
- at least one H-active compound and
- optionally at least one polyurethane additive and/or processing aid.

6. Process according to any of the preceding claims, **characterized in that** the second layer is a coating made of a rigid polyurethane lacquer, of a flexible polyurethane lacquer, of a polyurethane skin or of a polyurethane foam.

7. Process according to any of the preceding claims, **characterized in that** the structure is a dot matrix or a rhomboid matrix with structure depth 250 µm.

## Revendications

1. Procédé de fabrication d'un composant composite, comprenant :
- un support en une composition thermoplastique, qui est choisie dans le groupe constitué par les polycarbonates et les mélanges de polycarbonates, et
- une seconde couche sur le support,
la surface du support adjacente à la seconde couche étant structurée,
le procédé comprenant les étapes suivantes, qui se succèdent dans cet ordre :
(i) l'injection de la masse fondue de la composition thermoplastique, qui est choisie dans le groupe constitué par les polycarbonates et les mélanges de polycarbonates, dans une première cavité d'outil pour la fabrication du support thermoplastique,
(ii) le refroidissement de la masse fondue,
(iii) l'agrandissement de la cavité de l'outil de moulage par injection pour former un interstice,
(iv) l'injection d'un mélange de matières premières pour la formation de la seconde couche dans cet interstice entre le support thermoplastique et la surface de l'outil, le mélange de matières premières pour la formation de la seconde couche polymérisant en contact direct avec la surface du support thermoplastique,
(v) le démoulage de la pièce composite de la cavité de l'outil,
**caractérisé en ce que** l'outil dans lequel la composition thermoplastique est injectée présente sur sa surface intérieure une structure différente d'une surface lisse, par le biais de laquelle la surface du support thermoplastique acquière une structure, la structure étant soit une trame à points d'une profondeur de structure de 85 µm, 150 µm ou 250 µm, soit une trame à losanges d'une profondeur de structure de 70 µm, 150 µm ou 250 µm.

2. Procédé selon la revendication 1, **caractérisé en ce que** l'outil qui est utilisé pour la fabrication du support thermoplastique comprend une surface céramique.

3. Procédé selon l'une quelconque des revendications 1 ou 2, **caractérisé en ce que** l'outil a acquis la structure sur sa surface par gaufrage, fraisage, érosion et/ou traitement laser.

4. Procédé selon l'une quelconque des revendications précédentes, **caractérisé en ce que** la structure dans la surface du support a été acquise par gaufrage avec un outil.

5. Procédé selon l'une quelconque des revendications précédentes, **caractérisé en ce que** le mélange de matières premières pour la formation de la seconde couche contient :
- au moins un composant polyisocyanate,
- au moins un composé à H actif et
- éventuellement au moins un additif polyuréthane et/ou un adjuvant de procédé.

6. Procédé selon l'une quelconque des revendications précédentes, **caractérisé en ce que** la seconde couche est un revêtement en un vernis dur de polyuréthane, un vernis tendre de polyuréthane, une peau de polyuréthane ou une mousse de polyuréthane.

7. Procédé selon l'une quelconque des revendications précédentes, **caractérisé en ce que** la structure est une trame à points ou une trame à losanges d'une profondeur de structure de 250 µm.
